# EUROPEAN PATENT APPLICATION

(11) **EP 1 036 824 A2**
(43) Date of publication of application: **20.09.2000**
(21) Application number: 00105226.5
(22) Date of filing: 13.03.2000
(51) Int. Cl.: C09B 47/067, C09B 67/22

(54) **Metal phthalocyanine derivative and its use**

(30) Priority: 15.03.1999 JP 6766299; 25.10.1999 JP 30192299
(71) Applicant: TOYO INK MANUFACTURING CO., LTD., Chuo-ku, Tokyo 104 (JP)
(72) Inventor: Endo, Atsushi, Toyo Ink Manufacturing Co., Ltd., Chuoko, Tokyo (JP)
(74) Representative: Koepe, Gerd L., Dipl.-Chem.

(57) **Abstract**

A metal phthalocyanine derivative represented by the following general formula (1): 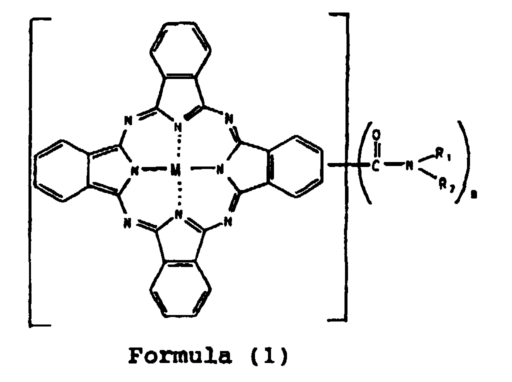 wherein R₁ and R₂ independently represent a hydrogen atom, a C₁₋₁₈ alkyl group, a C₁₋₁₈ alkenyl group, a cyclohexyl group, a phenyl group or an allyl group (provided that R₁ and R₂ are not hydrogen atoms at the same time), M represents Cu, Ni or Co and n represents 1,2,3 or 4.

## Description

### BACKGROUND OF THE INVENTION

### 1. Field of the Invention

The present invention relates to a crystal growth inhibitor for a metal phthalocyanine pigment, more particularly to a pigment composition.

### 2. Description of the Prior Art

A general process for the production of a copper phthalocyanine pigment involves a step of synthesizing crude phthalocyanine and a pigmentation step of micronizing the crude copper phthalocyanine. In the synthetic step, raw materials are heated in a high-boiling point solvent to obtain copper phthalocyanine. Since the resulting copper phthalocyanine has a coarse particle, it exhibits an unclear color tone and low tinting strength when it is used as a pigment and hence it has an ability insufficient to be put to practical use. Hence a pigmentation step is needed to improve the qualities, such as a color tone and tinting strength, required for a pigment. Examples of the process adopted in this step include an acid swelling method in which sulfuric acid and copper phthalocyanine are used to form a salt, which is then poured into a large amount of water thereby to precipitate fine pigments, an acid pasting method in which copper phthalocyanine is dissolved in a large quantity of sulfuric acid, followed by precipitating a pigment, a dry milling method in which copper phthalocyanine is milled in dry condition by using a ball mill and a solvent salt milling method in which copper phthalocyanine is kneaded in the presence of a solvent and a milling agent. e.g., a salt, by using a kneader. However, in the methods, such as the acid swelling method and the acid pasting method, which use sulfuric acid, a large amount of sulfuric acid waste is produced, which requiring much laborious work to treat the sulfuric acid waste. The dry milling method and the solvent salt milling method require long process time and a great amount of mechanical energy and are hence very uneconomical.

In recent years, as processes for the production of pigments which processes are highly productive and economical from an industrial point of view, the following methods have been known: a process comprising the steps of subjecting a crude phthalocyanine to ball milling with grinding elements in an organic liquid and removing the organic solvent to obtain finely divide pigment (U.S. Patent No. 2,556,727), and a method of producing ink directly from crude copper phthalocyanine by carrying out pigmentation by using the same fine milling medium as above simultaneously in a step of the production of ink (Japanese Patent Publication (JP-B) No. H3-74706). These methods were however uneconomical because a large amount of energy was required for the wet-milling. On the other hand, if the wet-milling is performed with a small amount of energy taking cost reduction into consideration, copper phthalocyanine is insufficiently micronized and thereby bulky particles of copper phthalocyanine are left. Hence it gives rise to the disadvantage of adversely affecting the qualities, e.g., vividness and flow property, of ink or the like when the copper phthalocyanine is used for ink or the like.

To solve these problems, Japanese Patent Application Laid-Open (JP-A) No. S48-32919 discloses a method of the direct production of a pigment in which chloromethylcopper phthalocyanine, phthalimidemethylcopper phthalocyanine, phthalocyanine of a metal other than copper or the like are added when copper phthalocyanine is synthesized. Any of these phthalocyanine derivatives, however, had a small effect of micronizing pigment particles, bringing about practically insufficient results. Also. JP-A-64-4657 discloses a method of adding a copper phthalocyanine derivative synthesized from pyromellitic acid anhydride when copper phthalocyanine is synthesized. However, a practically sufficient effect was obtained in this method only in the case where a relatively expensive sulfolane is used as the solvent in the synthesis. In the case of synthesizing using a solvent other than sulfolane, not only an insufficient effect of suppressing the crystal growth of pigment particle was obtained but also the reaction produced a firm agglomerate, making the stirring so difficult as not to carry out industrial operation.

### SUMMARY OF THE INVENTION

An object of the present invention is to solve the above problem by the provision of a novel metal phthalocyanine derivative which is added, when synthesizing copper phthalocyanine or when manufacturing a finer copper phthalocyanine pigment from coarse copper phthalocyanine particles, to suppress the crystal growth of copper phthalocyanine remarkably.

According to a first aspect of the present invention, there is provided a metal phthalocyanine derivative represented by the following general formula (1): 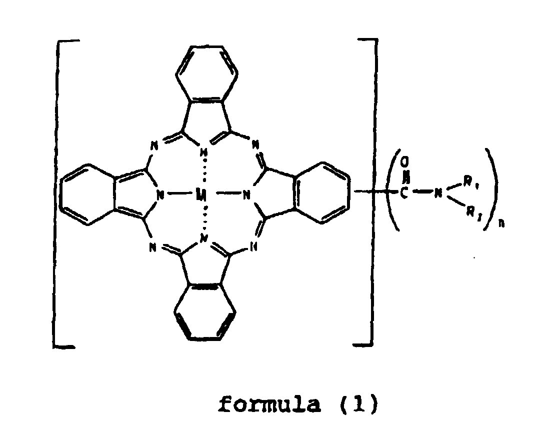 wherein R₁ and R₂ independently represent a hydrogen atom, a C₁₋₁₈ alkyl group, a C₁₋₁₈ alkenyl group, a cyclohexl group, a phenyl group or an allyl group (provided that R₁ and R₂ are not hydrogen atoms at the same time), M represents Cu, Ni or Co ,and n represents 1, 2, 3 or 4.

According to another aspect of the present invention. there is provided a crystal growth inhibitor for a phthalocyanine pigment, the inhibitor comprising the above metal phthalocyanine derivative.

According to a further aspect of the present invention, there is provided a method of using the above metal phthalocyanine derivative, the method comprising adding the metal phthalocyanine derivative when synthesizing copper phthalocyanine.

According to a further aspect of the present invention, there is provided a method of using the above metal phthalocyanine derivative, the method comprising adding the metal phthalocyanine derivative when preparing a finer copper phthalocyanine pigment from coarse copper phthalocyanine particles.

According to a further aspect of the present invention, there is provided a method of adding 0.1-20% by weight of the metal phthalocyanine derivative based on the copper phthalocyanine.

According to a further aspect of the present invention, there is provided a pigment composition comprising the phthalocyanine pigment and the metal phthalocyanine derivative.

The metal phthalocyanine derivative has an effect that it suppresses the generation of coarse particles of copper phthalocyanine by adding it when synthesizing copper phthalocyanine, and suppresses the crystal growth of copper phthalocyanine particles by adding it when manufacturing a finer copper phthalocyanine pigment from coarse copper phthalocyanine particles, thereby producing copper phthalocyanine having a particle diameter suitable for pigments in an efficient manner.

Also, when the metal phthalocyanine derivative of the present invention is used as a crystal growth inhibitor, copper phthalocyanine having a particle diameter suitable for pigments can be obtained. Therefore, an appropriate color tone and tinting strength can be obtained when this pigment is included in ink.

The present disclosure relates to subject matter contained in Japanese Patent Application No. HEI 11-67662, filed on March 15,1999 and No. HEI 11-301922, filed on October 25, 1999, the disclosure of which is expressly incorporated herein by reference in its entirety.

### DESCRIPTION OF THE PREFERRED EMBODIMENT

With regard to a method for the production of a metal phthalocyanine derivative represented by the general formula (1), the metal phthalocyanine derivative can be obtained easily by reacting a metal phthalocyaninecarbonyl chloride, obtained by a usual method, with a C₁₋₁₈ alkylamine, C₁₋₁₈ alkenylamine, cyclohexylamine, aniline or allylamine.

Alternatively, a derivative of phthalic acid anhydride represented by the general formula (2) described below is synthesized from anhydrous trimellitic acid chloride and a C₁₋₁₈ alkylamine, C₁₋₁₈ alkenylamine, cyclohexylamine, aniline or allylamine. Then, phthalic acid anhydride, urea, a metal represented by M in the general formula (1) or its compound and the phthalic acid anhydride derivative represented by the general formula (2) are reacted in the presence of a catalyst to obtain a metal phthalocyanine derivative with ease. 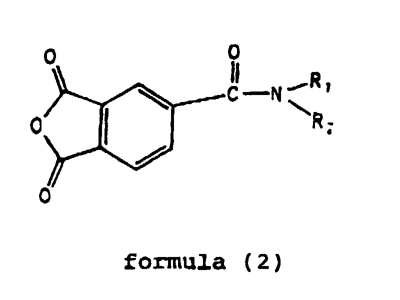 wherein R₁ and R₂ have the same meanings as above.

When the method of production is used, the ratio of the compound of the general formula (2) to phthalic acid anhydride is changed whereby the numeral (n) of the metal phthalocyanine derivative can be changed to a desired number.

The numeral (n) of the metal phthalocyanine derivative represented by the general formula (1) according to the present invention is 1 to 4 and particularly preferably 1 to 3.

The metal phthalocyanine derivative of the present invention may be used as a crystal growth inhibitor for phthalocyanine particles by adding it when synthesizing copper phthalocyanine or when preparing a fine copper phthalocyanine pigment from coarse copper phthalocyanine particles.

Methods applicable to synthesize copper phthalocyanine include all synthetic methods generally used, for example, a Wyler method in which phthalic acids, urea and copper (or a copper compound) are reacted in the presence or absence of a high-boiling point solvent with a catalyst, and a nitrile method in which phthalodinitrile is reacted as a starting material.

Examples of the method for the preparation of a copper phthalocyanine pigment include acid swelling method in which a salt is synthesized from sulfuric acid and copper phthalocyanine and is then poured into a large amount of water to precipitate fine pigments, acid pasting method in which copper phthalocyanine is dissolved in a large amount of sulfuric acid, followed by precipitating pigments in the same manner, dry milling method of dry-milling using a ball mill and a solvent salt milling method of kneading in the presence of a solvent and a milling agent such as a salt by using a kneader. The metal phthalocyanine derivative of the present invention has an effect of micronizing a phthalocyanine pigment in all of currently used methods for the preparation of a pigment.

The metal phthalocyanine derivative of the present invention has an effect of suppressing the crystal growth of pigment particles in a method of preparing a pigment by wet-milling in an organic solvent by using a fine milling medium, followed by removing the organic solvent, and in a method of producing ink directly from crude copper phthalocyanine by performing pigmentation using the same fine milling medium as above in a step of producing ink.

The amount of the metal phthalocyanine derivative of the present invention is 0.1 to 20% by weight and more preferably 1 to 10% by weight based on the copper phthalocyanine to be micronized. When the amount is less than 0.1% by weight, no effect of suppressing the crystal growth of pigment particles is obtained, whereas when the amount exceeds 20% by weight, an effect corresponding with the amount cannot be obtained.

The present invention will be hereinafter explained in more detail by way of examples in which all designations of parts and % indicate parts by weight and percent by weight (wt.%), respectively, unless otherwise noted.

### Example 1

58.3 parts of isopropylamide trimellitate anhydride obtained by the reaction between anhydrous trimellitic acid chloride and isopropylamine, 111 parts of phthalic anhydride, 180 parts of urea, 24.8 parts of copper (I) chloride and 0.3 parts of ammonium molybdate were reacted in 266 parts of t-pentylbenzene at 180°C under a pressure of 245 kPa (2.5 kg/cm²) for 4 hours. Then the solvent was distilled under reduced pressure and the resulting reaction mixture was heated with stirring in 2% sulfuric acid at 90°C for one hour, followed by filtration, washing with hot water and drying to obtain 140 parts of a blue product. The value of elemental analysis of a product obtained by recrystallizing the resulting blue product from concentrated sulfuric acid was as follows: C: 65.28, H: 3.49, Cu: 9.73. N: 19.22, O: 2.28. This analysis data fully accorded with the following theoretical value of elemental analysis of the object N-isopropyl-copper phthalocyanine-monocarboxamide: C: 65.40. H: 3.51, Cu: 9.61, N: 19.07, O: 2.42. It was confirmed also from X-ray diffraction analysis and infrared absorption spectrum that the resulting blue product was N-isopropyl-copper phthalocyanine-monocarboxamide.

### Example 2

160 parts of a blue product was obtained in the same manner as in Example 1 except that 75.75 parts of 2-ethylhexylamide trimellitate anhydride was used in place of 58.3 parts of isopropylamide trimellitate anhydride. The value of elemental analysis of a product obtained by recrystallizing the resulting blue product from concentrated sulfuric acid was as follows: C: 67.22. H: 4.50, Cu: 8.81. N: 17.30, O: 2.17. This analysis data fully accorded with the following theoretical value of elemental analysis of the object N-(2-ethylhexyl)-copper phthalocyaninemonocarboxamide: C: 67.34. H: 4.55. Cu: 8.69. N: 17.24. O: 2.19. It was confirmed also from X-ray diffraction analysis and infrared absorption spectrum that the resulting blue product was N-(2-ethylhexyl)-copper phthalocyanine-monocarboxamide.

### Example 3

189 parts of a blue product was obtained in the same manner as in Example 1 except that 111 parts of stearylamide trimellitate anhydride was used in place of 58.3 parts of isopropylamide trimellitate anhydride. The value of elemental analysis of a product obtained by recrystallizing the resulting blue product from concentrated sulfuric acid was as follows: C: 70.20, H: 6.05, Cu: 7.35, N: 14.51. O: 1.89. This analysis data fully accorded with the following theoretical value of elemental analysis of the object N-stearyl-copperphthalocyanine- monocarboxamide: C: 70.28, H: 6.13, Cu: 7.29, N: 14.46, O: 1.84. It was confirmed also from X-ray diffraction analysis and infrared absorption spectrum that the resulting blue product was N-stearyl-copper phthalocyanine-monocarboxamide.

### Example 4

138 parts of a blue product was obtained in the same manner as in Example 1 except that 57.8 parts of allylamide trimellitate anhydride was used in place of 58.3 parts of isopropylamide trimellitate anhydride. The value of elemental analysis of a product obtained by recrystallizing the resulting blue product from concentrated sulfuric acid was as follows: C: 65.58, H: 3.20, Cu: 9.68, N: 19.16, O: 2.38. This analysis data fully accorded with the following theoretical value of elemental analysis of the object N-allyl-copper phthalocyanine-moiiocarboicaflhide: C: 65.60, H: 3.21, Cu: 9.64, N: 19.12, O: 2.43. It was confirmed also from X-ray diffraction analysis and infrared absorption spectrum that the resulting blue product was N-allyl-copper phthalocyanine-monocarboxamide.

### Example 5

185 parts of a blue product was obtained in the same manner as in Example 1 except that 110 parts of oleylamide trimellitate anhydride was used in place of 58.3 parts of isopropylamide trimellitate anhydride. The value of elemental analysis of a product obtained by recrystallizing the resulting blue product from concentrated sulfuric acid was as follows: C: 70.40, H: 5.88, Cu: 7.36, N: 14.55, O: 1.81. This analysis data fully accorded with the following theoretical value of elemental analysis of the object N-oleyl-copper phthalocyanine-monocarboxamide: C: 70.44, H: 5.91, Cu: 7.31, N: 14.50. O: 1.84. It was confirmed also from X-ray diffraction analysis and infrared absorption spectrum that the resulting blue product was N-oleyl-copper phthalocyanine-monocarboxamide.

### Example 6

148 parts of a blue product was obtained in the same manner as in Example 1 except that 68.3 parts of cyclohexylamide trimellitate anhydride was used in place of 58.3 parts of isopropylamide trimellitate anhydride. The value of elemental analysis of a product obtained by recrystallizing the resulting blue product from concentrated sulfuric acid was as follows: C: 66.76. H: 3.84, Cu: 9.11, N: 18.00. O: 2.29. This analysis data fully accorded with the following theoretical value of elemental analysis of the object N-cyclohexyl-copper phthalocyaninemonocarboxamide: C: 66.80, H: 3.88, Cu: 9.06. N: 17.98, O: 2.28. It was confirmed also from X-ray diffraction analysis and infrared absorption spectrum that the resulting blue product was N-cyclohexyl-copper phthalocyanine-monocarboxamide.

### Example 7

156 parts of a blue product was obtained in the same manner as in Example 1 except that 66.8 parts of anilide trimellitate anhydride was used in place of 58.3 parts of isopropylamide trimellitate anhydride. The value of elemental analysis of a product obtained by recrystallizing the resulting blue product from concentrated sulfuric acid was as follows: C: 67.70, H: 3.22, Cu: 9.00, N: 17.81, O: 2.27. This analysis data fully accorded with the following theoretical value of elemental analysis of the object N-anilil-copper phthalocyanine-monocarboxamide: C: 67.74, H: 3.27, Cu: 8.96, N: 17.77, O: 2.26. It was confirmed also from X-ray diffraction analysis and infrared absorption spectrum that the resulting blue product was N-anilil-copper phthalocyanine-monocarboxamide.

### Example 8

136 parts of a blue product was obtained in the same manner as in Example 1 except that 59.5 parts of cobalt (II) chloride hexahydrate was used in place of 24.8 parts of copper (I) chloride. The value of elemental analysis of a product obtained by recrystallizing the resulting blue product from concentrated sulfuric acid was as follows: C: 65.82, H: 3.50, Co: 9.00, N: 19.23, O: 2.45. This analysis data fully accorded with the following theoretical value of elemental analysis of the object N-isopropyl-cobalt phthalocyaninemonocarboxamide: C: 65.86, H: 3.53, Co: 8.98, N: 19.20, O: 2.44. It was confirmed also from X-ray diffraction analysis and infrared absorption spectrum that the resulting blue product was N-isopropyl-cobalt phthalocyanine-monocarboxamide.

### Example 9

139 parts of a blue product was obtained in the same manner as in Example 1 except that 60.0 parts of nickel (II) chloride hexahydrate was used in place of 24.8 parts of copper (I) chloride. The value of elemental analysis of a product obtained by recrystallizing the resulting blue product from concentrated sulfuric acid was as follows: C: 65.84, H: 3.50, Ni: 8.97, N: 19.24, O: 2.45. This analysis data fully accorded with the following theoretical value of elemental analysis of the object N-isopropyl-nickel phthalocyaninemonocarboxamide: C: 65.88, H: 3.53, Ni: 8.94. N: 19.21, O: 2.44. It was confirmed also from X-ray diffraction analysis and infrared absorption spectrum that the resulting blue product was N-isopropyl-nickel phthalocyanine-monocarboxamide.

### Example 10

166 parts of a blue product was obtained in the same manner as in Example 1 except that the amount of isopropylamide trimellitate anhydride was altered from 58.3 parts to 175 parts and the amount of phthalic acid anhydride was altered from 111 parts to 37.0 parts. The value of elemental analysis of a product obtained by recrystallizing the resulting blue product from concentrated sulfuric acid was as follows: C: 63.54, H: 4.45, Cu: 7.68, N: 18.60, O: 5.73. This analysis data fully accorded with the following theoretical value of elemental analysis of the object N-isopropyl-copper phthalocyanine-tricarboxamide: C: 63.57, H: 4.49, Cu: 7.64, N: 18.53, O: 5.77. It was confirmed also from X-ray diffraction analysis and infrared absorption spectrum that the resulting blue product was N-isopropyl-copper phthalocyanine-tricarboxamide.

### Examples 11-20

148 parts of phthalic acid anhydride, 180 parts of urea, 24.8 parts of copper (I) chloride, 0.3 parts of ammonium molybdate and 7.2 parts of the metal phthalocyanine derivative obtained in Examples 1 to 10 were reacted in 266 parts of t-pentylbenzene at 180°C under a pressure of 245kPa(2.5 kg/cm²)for 4 hours. Then the solvent was distilled under reduced pressure and the resulting reaction mixture was heated with stirring in 2% sulfuric acid at 90°C for one hour, followed by filtration, washing with hot water and drying to obtain a blue product. The yield of the resulting product and the specific surface area of the product which was measured by a BET method are shown in Table 1.

### Comparative Example 1

148 parts of phthalic acid anhydride, 180 parts of urea, 24.8 parts of copper (I) chloride and 0.3 parts of ammonium molybdate were reacted in 266 parts of t-pentylbenzene at 180°C under a pressure of 245kPa(2.5kg/cm²)for 4 hours. Then the solvent was distilled under reduced pressure and the resulting reaction mixture was heated with stirring in 2% sulfuric acid at 90°C for one hour, followed by filtration, washing with hot water and drying to obtain 127 parts of a blue product. The specific surface area of the product which was measured by a BET method was 5.9 m²/g, showing that the product was composed of particles which were remarkably larger than those of the products of Examples 11 to 20.

### Comparative Example 2

148 parts of phthalic acid anhydride, 180 parts of urea, 24.8 parts of copper (I) chloride, 0.3 parts of ammonium molybdate and 7.2 parts of monocarbamoyl-copper phthalocyanine were reacted in 266 parts of t-pentylbenzene at 180°C under a pressure of 245kPa(2.5 kg/cm²). As a consequence, most of product adhered to the inside wall of a reaction container and to a stirring blade and it became difficult to continue stirring 3 hours after the reaction was started. Then the solvent was distilled under reduced pressure and the resulting reaction mixture was heated with stirring in 2% sulfuric acid at 90°C for one hour, followed by filtration, washing with hot water and drying to obtain 119 parts of a blue product. The specific surface area of the resulting product which was measured by a BET method was 7.5 m²/g. It was estimated that the product was reduced in yield and inferior in reaction ability in contrast to the products of Examples 11 to 20. Also, the result showed that the resulting particle had a large size.

The results are reported in the following Table.

**Table**

| Example | Metal phthalocyanine deivative | Amount obtained (parts by weight) | Specific surface area (m²/g) |
|---|---|---|---|
| 11 | N-isopropyl-copper phthalocyanine-monocarboxamide | 135 | 26.3 |
| 12 | N-(2-ethylhexyl)-copper phthalocyanine-monocarboxamide | 134 | 19.9 |
| 13 | N-stearyl-copper phthalocyanine-monocarboxamde | 135 | 11.8 |
| 14 | N-allyl-copper phthalocyanine-monocarboxamide | 131 | 22.2 |
| 15 | N-oleyl-copper phthalocyanine-monocarboxamide | 135 | 12.3 |
| 16 | N-cyclohexyl-copper phthalocyanine-monocarboxamide | 136 | 30.1 |
| 17 | N-anilil-copper phthalocyanine-monocarboxylate | 137 | 35.5 |
| 18 | N-isopropyl-cobalt phthalocyanine-monocarboxamide | 132 | 15.5 |
| 19 | N-isopropyl-nickel phthalocyanine-monocarboxamide | 131 | 16.3 |
| 20 | N-isopropyl-copper phthalocyanine-tricarboxamide | 133 | 60.0 |

| Comparative Example | | | |
|---|---|---|---|
| 1 | none | 127 | 5.9 |
| 2 | Monocarbamoyl-copper phthalocyanine | 119 | 7.5 |

It is further understood by those skilled in the art that the foregoing description is a preferred embodiment of the invention and that various changes and modifications may be made in the invention without departing from the spirit and scope thereof.

## Claims

1. A metal phthalocyanine derivative represented by the following general formula (1): 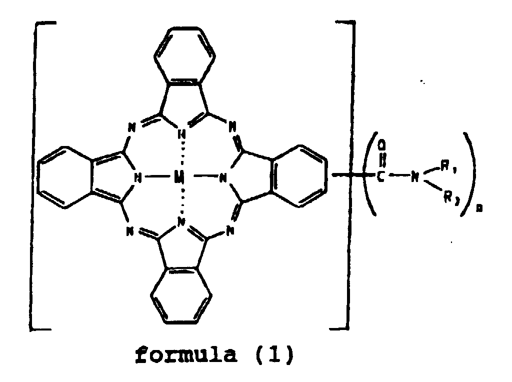 wherein R₁ and R₂ independently represent a hydrogen atom, a C₁₋₁₈ alkyl group, a C₁₋₁₈ alkenyl group, a cyclohexyl group, a phenyl group or an allyl group (provided that R₁ and R₂ are not hydrogen atoms at the same time), M represents Cu, Ni or Co and n represents 1,2,3 or 4.

2. A crystal growth inhibitor for a phthalocyanine pigment comprising the metal phthalocyanine derivative as claimed in Claim 1.

3. A method of using the metal phthalocyanine derivative. the method comprising adding the metal phthalocyanine derivative as claimed in Claim 1 when synthesizing copper phthalocyanine.

4. The method as claimed in Claim 3, the method of adding 0.1-20% by weight of the metal phthalocyanine derivative based on the copper phthalocyanine.

5. A method of using the metal phthalocyanine derivative, the method comprising adding the metal phthalocyanine derivative when preparing a finer copper phthalocyanine pigment from coarse copper phthalocyanine particles.

6. The method as claimed in Claim 5, the method of adding 0.1-20% by weight of the metal phthalocyanine derivative based on the copper phthalocyanine.

7. A pigment composition comprising the phthalocyanine pigment and the metal phthalocyanine derivative as claimed in Claim 1.
